(19) Europäisches Patentamt
European Patent Office
Office européen des brevets

(11) EP 1 817 437 B1

(12) **EUROPEAN PATENT SPECIFICATION**

(45) Date of publication and mention of the grant of the patent:
**25.03.2009 Bulletin 2009/13**

(21) Application number: **05804481.9**

(22) Date of filing: **24.11.2005**

(51) Int Cl.:
*C22B 3/38* (2006.01) *C22B 7/00* (2006.01)
*C22B 59/00* (2006.01) *C22B 3/10* (2006.01)

(86) International application number:
**PCT/CZ2005/000088**

(87) International publication number:
**WO 2006/058508 (08.06.2006 Gazette 2006/23)**

(54) **METHOD OF EXTRACTING EUROPIUM(III) AND YTTRIUM(III) FROM CONCENTRATE OF LUMINOPHORE DUST OR SLUDGE**

EXTRAKTIONSVERFAHREN ZUR ABTRENNUNG VON EUROPIUM(III) UND YTTRIUM(III) AUS LUMINOPHORENSTAUB UND-SCHLAMM

MÉTHODE D'EXTRACTION DE L'EUROPIUM(III) ET DE L'YTTRIUM(III) À PARTIR DE CONCENTRÉS DE POUDRE OU BOURBE LUMINOPHORE

(84) Designated Contracting States:
**AT BE BG CH CY CZ DE DK EE ES FI FR GB GR HU IE IS IT LI LT LU LV MC NL PL PT RO SE SI SK TR**

(30) Priority: **30.11.2004 CZ 20041156**

(43) Date of publication of application:
**15.08.2007 Bulletin 2007/33**

(73) Proprietor: **Ustav Chemickych Procesu Akademie Ved Ceské Republiky**
**165 02 Praha 6 - Suchdol (CZ)**

(72) Inventor: **GRUBER, Vaclav**
**163 00 Praha 6 - Repy (CZ)**

(74) Representative: **Gabrielova, Marta et al**
**Inventia s.r.o.**
**Na Belidle 3**
**150 00 Praha 5 (CZ)**

(56) References cited:
**US-A- 3 110 556**
**US-A- 3 524 723**
**US-A- 3 954 657**
**US-A- 4 041 125**
**US-A- 4 386 056**
**US-A- 4 650 652**
**US-A- 5 015 447**

- **PATENT ABSTRACTS OF JAPAN vol. 011, no. 159 (C-423), 22 May 1987 (1987-05-22) & JP 61 291416 A (ASAHI CHEM IND CO LTD), 22 December 1986 (1986-12-22)**
- **PATENT ABSTRACTS OF JAPAN vol. 004, no. 182 (C-035), 16 December 1980 (1980-12-16) & JP 55 122836 A (MITSUBISHI CHEM IND LTD), 20 September 1980 (1980-09-20)**
- **PATENT ABSTRACTS OF JAPAN vol. 2000, no. 10, 17 November 2000 (2000-11-17) & JP 2000 192167 A (SAITO FUMIYOSHI; SENDAI CLEAN & ECO-TECHNOLOGICAL CORP), 11 July 2000 (2000-07-11)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 817 437 B1

## Description

### Technical Field

The invention relates to selective isolation of yttrium and europium salts from the concentrate of luminophores, which was extracted by an inorganic acid, preferably hydrochloric acid or nitric acid. The concentrate of luminophores is obtained during the recycling of used screens of colour televisions or monitors.

### Background Art

The necessity of ecological reprocessing of the growing amount of electro technical wastes from households and the commercial sector leads to the introduction of new recycling technologies. With regard to the amount and harmfulness of the waste, one of the most important technologies is the reprocessing of used TV receivers and monitors of personal computers. In this process, major part of the waste as to the volume is glass. Especially barium and lead glass, used in the cathode-ray tube funnel and luminescent screens, is a valuable raw material. However, it must not be contaminated by the presence of luminiscent layer on the inner part of the screen. This luminophore, deposited in the form of powder layer, contains some elements, which change the optical properties of the glass and thereby make it less valuable for further use. The main source of this contamination are the compounds of yttrium and europium, the price of which is considerably high and therefore their isolation is economically desirable.

In order to maintain the value of the lead glass, the luminophore layer is mechanically, eventually also chemically removed (see the patent application PL 353981). The resulting dust, eventually sludge, containing luminescent substances, predominantly oxides and sulphides of zinc, cadmium, yttrium and europium, is so far deposited as toxic waste, because it contains heavy metals (zinc, cadmium).

In the prior art, several processes dealing with the separation of lanthanides, incl. yttrium, from their mixtures are known.

US 3,110,556 deals with the recovery of yttrium from the aqueous solution of lanthanide-type rare earth metals, providing an aqueous solution containing rare earth metals and yttrium ions with a content of free mineral acid not higher than 2 N, contacting said solution with a dialkyl phosphoric acid, whereby the heavier rare earth metals and yttrium ions are extracted into an organic phase and the lighter rare earth ions remain in the aqueous solution. After separating the aqueous and organic phases, said organic phase is contacted with a mineral acid of a concentration between 5 and 6 N, whereby an aqueous strip solution containing the yttrium ions and the heavier rare earth ions is obtained, adding a water-soluble thiocyanate to said aqueous strip solution, contacting said thiocyanate strip solution with a solvent selected from the group consisting of trialkyl phosphate, dialkyl phosphoric acid, alkyl phosphonate and dialkyl aryl phosphonate whereby said heavier rare earth values are taken up by an extract phase while said yttrium values remain in said aqueous strip solution and separating said extract phase from said strip solution. This process is based on the dependence of the extraction behaviour of the rare earth metals on their atomic numbers, wherein yttrium behaves as if it had an atomic number of between 67 and 68 in the extraction with dialkyl phosphoric acid, and an atomic number of between 57 and 62 in the extraction as isocyanate with a trialkyl phosphate or trialkyl phosphonate or dialkyl phosphoric acid. These steps are repeated in a multi-stage embodiment.

US 3,524,723 teaches the process of the extraction of europium from the mixture of rare earth (RE) metal ions obtained from the rare earth metals containing ores by fractional solvents extraction from an acidic aqueous solution of the RE ions in two circuit interlocked multi-stage fraction solvent extraction system by di-2-ethylhexyl phosphoric acid (DEHPA) in organic solvent.

JP 61-291416 teaches a process for the separation of rare earth elements, yttrium and scandium in acidic aqueous solution of the chlorides or nitrates thereof, wherein the extractant is an acidic phosphoric acid ester having different partition coefficient according to the acid concentration. Di-2-ethylhexyl phosphate is preferable for the separation of medium rare earth component and 2-ethylhexylphosphonic acid 2-ethylhexyl ester is preferable for the separation of heavy rare earth components including yttrium and scandium.

JP 55-122836 describes the process of separation of europium from the mixture of rare earth metals by multi-stage extraction, wherein in the first extraction step europium and medium and heavy rare earth elements are extracted by acidic phosphoric acid ester type extracting reagent into an organic phase, then they are extracted into an acidic aqueous solution, in which the europium is reduced and it is in this reduced state when it is separated from the other rare earth elements.

US 5,015,447 describes the process for separation of rare earth elements from their sulphurous acid solutions by solvent extraction with esters of phosphoric acid or esters of phosphonic acid or esters of phosphinic acid or esters of thiophosphinic acid. US 4,041,125 discloses a process for separation of the lanthanide elements and yttrium, especially terbium and yttrium from impurities. The sulphuric acid solution of lanthanides (incl. yttrium) is contacted with a water-immiscible organic solvent containing di-2-ethylhexyl phosphoric acid, and the lanthanides are extracted into the organic

phase. After that, the organic layer is separated from the aqueous layer and subjected to a back extraction with an aqueous solution containing sulphuric acid. The contact time in the back extraction is regulated so that a desired element or desired elements are extracted back into the aqueous phase.

In the prior art, also some processes for recovering of lanthanides, incl. yttrium, from waste phosphors or waste fluorescent materials are known.

US 3,954,657 describes the process for reclaiming rare earth oxysulphide phosphors, especially the red-emitting phosphor yttrium oxysulphide, from contaminated colour cathode ray tube screening waste, the reclaimed phosphors having improved adherability and resistance to cross-contamination and being suitable for re-screening. The process removes the impurities from the oxysulphide phosphors by the following steps: baking step to remove hardened polyvinyl alcohol and acidic washing step to remove oxide or oxysulphate coating and oxidized zinc compounds from the phosphor. The phosphors are not further separated, because they can be reused as a mixture.

US 4,386,056 describes the process for recovering yttrium and europium from phosphors or solutions, which have become contaminated, by ion exchange by passing the acid solution containing the yttrium and europium ions through a cation resin exchange column, which holds the yttrium and europium, that are subsequently stripped from the resin exchange column using a more concentrated hydrochloric acid solution. The yttrium and europium ions are not further separated from each other.

JP 2000-192167 teaches the separation of rare earth metal components of waste fluorescent materials by the mechano-chemical treatment by a ball mill and subsequent weak acid elution. The low degree mechano-chemical treatment (e.g. 700 rpm for 2 hours) yields yttrium and europium components, while the high degree mechano-chemical treatment (e.g. 400 rpm for 20 minutes) yields lanthane, cerium and terbium components.

US 4,650,652 provides a process for recovering rare earth oxides from a waste rare earth phosphor containing at least iron and/or calcium and/or zinc as impurities. The process comprises the steps of dissolving the waste rare earth phosphor in an excess amount of a strong acid, adding oxalic acid to obtain precipitates of rare earth oxalates at the temperature of at least 70 °C, washing the precipitates with warm water, and baking them. The rare earth metals are not separated from each other by this process; they are only separated from said impurities.

The present invention provides a method of isolation of valuable components (yttrium and particularly europium) present in the luminophore dust or sludge, thereby significantly improving the economic balance of the recycling.

Disclosure of Invention

The object of the present invention is a method of extraction of yttrium(III) ions and subsequent extraction of europium(III) ions from the concentrate of luminophore dust or sludge, the major component of which are oxides and sulphides of zinc, cadmium, yttrium and europium. An aqueous solution is prepared from the concentrate of luminophore dust or sludge and said aqueous solution is subsequently contacted with an extraction agent of general formula I:

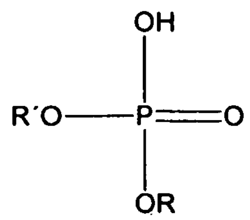

I,

wherein R is linear or branched alkyl group containing 4 to 12 carbon atoms, and R' is hydrogen atom or linear or branched alkyl group containing 4 to 12 carbon atoms;

whereas the extraction agent is either pure or diluted with an organic solvent, whereas at first yttrium(III) ions are extracted at the equilibrium concentration of free acid in the aqueous phase of the extraction system ranging from 0.8 to 1.8 mol/l and subsequently europium(III) ions are extracted at the equilibrium concentration of free acid in the aqueous phase of the extraction system ranging from 0.2 to 0.7 mol/l. After separating the aqueous and the organic phase after the extraction, europium(III) and yttrium(III) ions are recovered from the organic phase. Other elements present in the concentrate of luminophore dust or sludge remain in the waste aqueous solution.

The europium (III) and yttrium (III) ions are then washed out from the organic extracts with 0.5 - 8 mol/l inorganic acid and can be subsequently chemically worked-up by processes commonly known in the art to yield a suitable product, such as yttrium (III) and europium (III) oxides.

In the countercurrent multi-stage embodiment of the extraction process it is possible to acquire almost any grade of purity of the individual components.

The preparation of the aqueous solution from the concentrate of luminophore dust or sludge can be performed by e.g. dissolution in slight excess of inorganic acid. The term "inorganic acid" means herein a common mineral acid, such as sulphuric acid, hydrochloric acid, nitric acid or perchloric acid. Preferably hydrochloric acid or nitric acid are used, because they both form soluble salts with the elements present in the luminophore. The use of sulphuric acid is less suitable, because yttrium(III) and europium(III) sulphides show a lower solubility in water. The use of other acids, such as perchloric acid, is possible, but uneconomical. The resulting extract is subsequently filtered. The overall concentration of metals in the extract should range from 0.01 mol/l to 1.5 mol/l. At a higher ionic strength of the solution, undesired solvation mechanisms of the extraction could take place.

The extraction agent of general formula I contains an acidic hydrogen atom, so that it can be generally abbreviated HL, wherein H is the cleavable acidic hydrogen atom and L is the organic residue of the molecule.

In the preferred embodiment, bis(2-ethylhexyl)phosphoric acid (HDEHP) can be used. The HDEHP is commonly used in hydrometallurgy for recovery and separation of some metals in solutions and can easily be used for the separation in the process of the invention. The reaction occurs in accordance with the below-indicated equation, wherein the symbol M denotes europium or yttrium, HL denotes monomeric molecule of HDEHP and the indexes aq., resp. org. denote aqueous, respective organic phase.

$$M^{3+}{}_{aq} + 3\,(HL)_{2\,org} \leftrightarrows M(HL_2)_{3\,org} + 3\,H^{+}{}_{aq}$$

The extraction agent can be diluted with various organic solvents, preferably aliphatic or aromatic hydrocarbons, optionally the mixtures thereof. Low solubility of the organic solvent in water, low volatility, low flammability and low toxicity are advantageous. Preferably octane, decane or xylene are used as organic solvents.

The extraction agent or its solution in the organic solvent reacts with the aqueous solutions of the yttrium(III) and europium(III) salts, prepared from the concentrate of luminophore dust or sludge, yielding organic complexes of these metals that migrate into the organic phase. The equilibrium of this reaction is strongly dependent on the equilibrium concentration of the free acid in the reacting aqueous phase. At a lower concentration of the free acid, the metal ions are extracted into the organic phase. Addition of inorganic acid into the aqueous phase causes the migration of the metal ions back to the aqueous phase. The ability of the metal ions to migrate into the organic phase or back to the aqueous phase is different for various elements present in the extract of luminophores, which allows the effective separation of the elements. The distribution of the metal(III) ion between the organic and the aqueous phase depends on the cube (third power) of the concentration of hydrogen ions in the aqueous phase and is therefore very steep (J. Phys. Chem. 1981, 85(24), pp. 3646-3651).

The equilibrium concentration of the free acid in the aqueous phase, suitable for the extraction of the yttrium (III) and europium(III) ions depends on the solvent used. Generally, in case of the europium(III) ion the distribution ratio between the organic and the aqueous phase equates one at the concentration of free acid in the aqueous phase ca 0.7 mol/l when using aliphatic solvents and ca 0.4 mol/l when using aromatic solvents. Also inside these general groups of solvents there are differences, depending on the length and structure of the chain. The suitable concentration of the free acid in the aqueous phase for the extraction of the europium(III) ions is in the range of from 0.1 to 1.5 mol/l. Yttrium(III) reaches the distribution ratio equal to one at the concentration of the free acid in the aqueous phase ca 1.8 mol/l. The suitable concentration of free acid in the aqueous phase for the extraction of yttrium(III) ions into the organic phase is 0.5 to 3.0 mol/l, for a fully selective extraction it ranges from 0.8 to 1.8 mol/l.

The major components of luminophore solutions are zinc, eventually cadmium, which have a low ability to extract in the extraction system of the present invention. A higher degree of extraction of these elements can be reached only at the acidity of the aqueous phase lower than 0.1 - 0.2 mol/l, therefore these values of acidity should be avoided when removing impurities from yttrium and europium.

The present invention is further illustrated by the following examples, which should not be construed as further limiting.

Examples of carrying out the Invention

In the following examples the concentrations of metal ions were determined by atomic absorption spectroscopy (AAS), and the concentrations of free acid ($H^+$) were determined by titration with pH-electrode.

Example 1

1000 ml of 1 M solution of bis(2-ethylhexyl)phosphoric acid (HDEHP) in decane was shaken for 10 minutes

with 1000 ml of the solution formed by dissolving 200 g of the luminophore concentrate in 25 % (w/w) HCl. The aqueous and the organic phase were separated. The initial composition of the aqueous solution and the resulting equilibrium concentrations of the components in the aqueous and the organic phase are listed in Table 1, which shows that the organic phase contains yttrium ions and only trace amounts of zinc and europium ions.

Table 1

| ion | initial concentration in the aqueous solution [mol/l] | equilibrium concentration [mol/l] | |
|---|---|---|---|
| | | aqueous phase | organic phase |
| $Zn^{2+}$ | 1,13 | 1,12 | 0,004 |
| $Y^{3+}$ | 0,202 | 0,045 | 0,160 |
| $Eu^{3+}$ | 0,042 | 0,040 | 0,002 |
| $H^+$ | 1,81 | 2,27 | - |

Example 2

The resulting aqueous phase formed in Example 1 was partly neutralized by addition of 160 ml of 10 M ammonia solution and the volume was adjusted to 1000 ml. This initial solution was shaken with 1000 ml of 1 M solution of bis(2-ethylhexyl)phosphoric acid in decane (the same procedure as in Example 1). The resulting organic and aqueous phase were separated.

The initial composition of the aqueous solution and the resulting equilibrium concentrations of the components in the aqueous and the organic phase are listed in Table 2, which shows that the organic phase contains yttrium and europium ions.

Table 2

| ion | initial concentration in the aqueous solution [mol/l] | equilibrium concentration [mol/l] | |
|---|---|---|---|
| | | aqueous phase | organic phase |
| $Zn^{2+}$ | 1,02 | 1,00 | 0,03 |
| $Y^{3+}$ | 0,038 | 0,001 | 0,036 |
| $Eu^{3+}$ | 0,035 | 0,004 | 0,030 |
| $H^+$ | 0,21 | 0,45 | - |

Example 3

1 M solution of the bis(2-ethylhexyl)phosphoric acid (HDEHP) in decane was contacted in a six-stage battery of mixers - separating vessels continually with the initial aqueous solution of the luminophore extract, the composition of which is shown in Table 3. The volume ratio of the organic phase to the aqueous phase was 3 : 1.

The resulting organic extract was subsequently washed in three stages, first with 0.8 M HCl solution (extract A) and then with 8 M HCl solution (extract B). The volume ratio of the organic phase to the aqueous phase was 3:1. The composition of the extracts is shown in Table 3: extract A contains europium ions and extract B yttrium ions.

In this process, the concentration of free acid in the aqueous phase of the extraction system in the course of the extraction reaction is ca 0.7 mol/l.

Table 3

| ion | initial concentration in the aqueous solution [mol/l] | extract A [mol/l] | extract B [mol/l] |
|---|---|---|---|
| $Zn^{2+}$ | 1,01 | 0,001 | 0,001 |
| $Y^{3+}$ | 0,176 | 0,002 | 0,170 |
| $Eu^{3+}$ | 0,034 | 0,029 | 0,004 |
| $H^+$ | 0,05 | 0,70 | 7,3 |

Example 4

1000 ml of 1 M solution of bis(2-ethylhexyl)phosphoric acid (HDEHP) in xylene was shaken for 10 minutes with 1000 ml of the solution formed as in Example 1. The initial composition of the aqueous solution and the resulting equilibrium concentrations of the elements in the aqueous and the organic phase are shown in Table 4, which shows that the organic phase contains yttrium ions and only trace amounts of zinc ions.

Table 4

| ion | initial concentration in the aqueous solution [mol/l] | equilibrium concentration [mol/l] | |
|---|---|---|---|
| | | aqueous phase | organic phase |
| $Zn^{2+}$ | 1,13 | 1,13 | 0,001 |
| $Y^{3+}$ | 0,202 | 0,166 | 0,035 |
| $Eu^{3+}$ | 0,042 | 0,042 | min. |
| $H^+$ | 1,81 | 1,90 | - |

## Claims

1. A method of extraction of yttrium(III) ions and europium(III) ions from a concentrate of luminophore dust or sludge, the major component of which are oxides and sulphides of zinc, cadmium, yttrium and europium, wherein an aqueous solution is prepared from the concentrate of luminophore dust or sludge, **characterized in that** said aqueous solution is subsequently contacted with an extraction agent of general formula I,

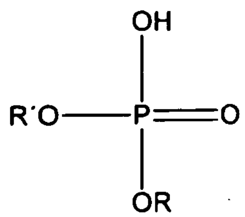

I

wherein R is linear or branched alkyl group containing 4 to 12 carbon atoms,
and R' is hydrogen atom or linear or branched alkyl group containing 4 to 12 carbon atoms;
wherein the extraction agent is pure or diluted with an organic solvent;
and after separating the aqueous and the organic phase after the extraction, europium (III) or yttrium(III) ions are recovered from the organic phase,
and **in that** at first yttrium(III) ions are extracted at the equilibrium concentration of free acid in the aqueous phase of the extraction system ranging from 0.8 to 1.8 mol/l and subsequently europium(III) ions are extracted at the equilibrium concentration of free acid in the aqueous phase of the extraction system ranging from 0.2 to 0.7 mol/l.

2. The method of extraction of yttrium(III) ions and subsequent extraction of europium(III) ions according to claim 1, **characterized in that** the extraction agent is bis(2-ethylhexyl)phosphoric acid.

3. The method of extraction of yttrium(III) ions and subsequent extraction of europium(III) ions according to claim 1 or claim 2, **characterized in that** the organic solvent, in which the extraction agent is dissolved, is aliphatic or aromatic hydrocarbon or their mixture.

4. The method of extraction of yttrium(III) ions and subsequent extraction of europium(III) ions according to claim 1 or claim 2, **characterized in that** the organic solvent in which the extraction agent is dissolved, is octane, decane or xylene.

5. The method of extraction of yttrium(III) ions and subsequent extraction of europium(III) ions according to any of the

preceding claims, **characterized in that** it is performed in a countercurrent multi-stage arrangement of the extraction process.

## Patentansprüche

1. Verfahren zur Extraktion von Yttrium(III)-Ionen und Europium(III)-Ionen aus einem Konzentrat von Luminophorenstaub oder -schlamm, deren Hauptbestandteil Oxide und Sulfide von Zink, Cadmium, Yttrium und Europium sind, wobei eine wässrige Lösung aus dem Konzentrat von Luminophorenstaub oder -schlamm hergestellt wird, **dadurch gekennzeichnet, dass** die wässrige Lösung nachfolgend mit einem Extraktionsmittel mit der allgemeinen Formel 1,

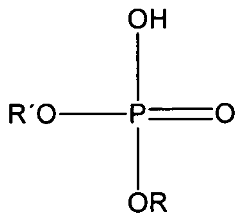

I

in Verbindung gebracht wird, wobei R eine lineare oder verzweigte Alkylgruppe mit 4 bis 12 Kohlenstoffatomen ist, und R' ein Wasserstoffatom oder eine lineare oder verzweigte Alkylgruppe mit 4 bis 12 Kohlenstoffatomen ist; wobei das Extraktionsmittel rein oder mit einem organischen Lösungsmittel verdünnt ist;
und nach dem Trennen der wässrigen und der organischen Phase nach der Extraktion, die Europium(III)-Ionen oder Yttrium(III)-Ionen aus der organischen Phase zurückgewonnen werden,
und **dadurch**, dass zuerst Yttrium(III)-Ionen bei der Gleichgewichtskonzentration von freier Säure in der wässrigen Phase des Extraktionssystems zwischen 0,8 bis 1,8 mol/l extrahiert werden, und nachfolgend Europium(III)-Ionen bei der Gleichgewichtskonzentration von freier Säure in der wässrigen Phase des Extraktionssystems zwischen 0,2 bis 0,7 mol/l extrahiert werden.

2. Verfahren zur Extraktion von Yttrium(III)-Ionen und nachfolgenden Extraktion von Europium(III)-Ionen nach Anspruch 1, **dadurch gekennzeichnet, dass** das Extraktionsmittel Bis(2-ethylhexyl)phosphorsäure ist.

3. Verfahren zur Extraktion von Yttrium(III)-Ionen und nachfolgenden Extraktion von Europium(III)-Ionen nach Anspruch 1 oder Anspruch 2, **dadurch gekennzeichnet, dass** das organische Lösungsmittel, in dem das Extraktionsmittel gelöst ist, aliphatischer oder aromatischer Kohlenwasserstoff oder eine Mischung daraus ist.

4. Verfahren zur Extraktion von Yttrium(III)-Ionen und nachfolgenden Extraktion von Europium(III)-Ionen nach Anspruch 1 oder Anspruch 2, **dadurch gekennzeichnet, dass** das organische Lösungsmittel, in dem das Extraktionsmittel gelöst ist, Oktan, Dekan oder Xylol ist.

5. Verfahren zur Extraktion von Yttrium(III)-Ionen und nachfolgenden Extraktion von Europium(III)-Ionen nach einem der vorhergehenden Ansprüche, **dadurch gekennzeichnet, dass** es in einer Gegenstrom-Mehrstufen-Anordnung des Extraktionsprozesses durchgeführt wird.

## Revendications

1. Procédé d'extraction d'ions yttrium(III) et d'ions europium(III) d'un concentré de poussière ou boue luminophore, dont le constituant principal consiste en oxydes et sulfures de zinc, de cadmium, d'yttrium et d'europium, dans lequel une solution aqueuse est préparée à partir du concentré de poussière ou boue luminophore, **caractérisé en ce que** ladite solution aqueuse est ensuite mise en contact avec un agent d'extraction de formule générale 1,

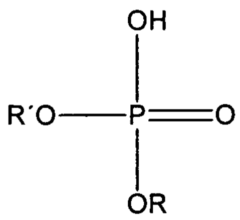

I

dans laquelle R représente un groupe alkyle linéaire ou ramifié contenant 4 à 12 atomes de carbone,
et R' représente un atome d'hydrogène ou un groupe alkyle linéaire ou ramifié contenant 4 à 12 atomes de carbone ;
ledit agent d'extraction étant pur ou dilué avec un solvant organique;
et, après séparation de la phase aqueuse et de la phase organique après l'extraction, les ions europium(III) ou yttrium(III) sont recueillis à partir de la phase organique,
et **en ce que** tout d'abord les ions yttrium(III) sont extraits à la concentration à l'équilibre d'acide libre dans la phase aqueuse du système d'extraction allant de 0,8 à 1,8 mol/l et ensuite les ions europium(III) sont extraits à la concentration à l'équilibre d'acide libre dans la phase aqueuse du système d'extraction allant de 0,2 à 0,7 mol/l.

2. Procédé d'extraction des ions yttrium(III) et ensuite d'extraction des ions europium(III) suivant la revendication 1, **caractérisé en ce que** l'agent d'extraction est l'acide bis(2-éthylhexyl)phosphorique.

3. Procédé d'extraction des ions yttrium(III) et ensuite d'extraction des ions europium(III) suivant la revendication 1 ou la revendication 2, **caractérisé en ce que** le solvant organique, dans lequel l'agent d'extraction est dissous, est un hydrocarbure aliphatique ou aromatique ou leur mélange.

4. Procédé d'extraction des ions yttrium(III) et ensuite d'extraction des ions europium(III) suivant la revendication 1 ou la revendication 2, **caractérisé en ce que** le solvant organique, dans lequel l'agent d'extraction est dissous, est l'octane, le décane ou le xylène.

5. Procédé d'extraction des ions yttrium(III) et ensuite d'extraction des ions europium(III) suivant l'une quelconque des revendications précédentes, **caractérisé en ce qu'**il est mis en oeuvre dans une configuration à étages multiples à contre-courant du procédé d'extraction.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- PL 353981
- US 3110556 A
- US 3524723 A
- JP 61291416 A
- JP 55122836 A
- US 5015447 A
- US 4041125 A
- US 3954657 A
- US 4386056 A
- JP 2000192167 A
- US 4650652 A


### Non-patent literature cited in the description


- *J. Phys. Chem.,* 1981, vol. 85 (24), 3646-3651